(19) Europäisches Patentamt
European Patent Office
Office européen des brevets

(11) **EP 3 648 890 B1**

(12) # EUROPEAN PATENT SPECIFICATION


(45) Date of publication and mention of the grant of the patent:
**12.05.2021 Bulletin 2021/19**

(21) Application number: **18732096.5**

(22) Date of filing: **22.06.2018**

(51) Int Cl.:
***B03D 1/014*** *(2006.01)* ***C22B 3/00*** *(2006.01)*
***C07F 9/09*** *(2006.01)* ***C11D 3/06*** *(2006.01)*
***C07F 9/11*** *(2006.01)*

(86) International application number:
**PCT/EP2018/066782**

(87) International publication number:
**WO 2019/007712 (10.01.2019 Gazette 2019/02)**


(54) **PROCESS TO TREAT CARBONATITIC NON-SULFIDIC ORES AND COLLECTOR COMPOSITION THEREFOR**

VERFAHREN ZUR BEHANDLUNG VON NICHTSULFIDISCHEN KARBONATIT-ERZEN UND SAMMLERZUSAMMENSETZUNG DAFÜR

PROCÉDÉ DE TRAITEMENT DE MINERAIS CARBONATITIQUES NON SULFURIQUES ET COMPOSITION COLLECTRICE ASSOCIÉE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2017 EP 17179624**

(43) Date of publication of application:
**13.05.2020 Bulletin 2020/20**



(73) Proprietor: **Nouryon Chemicals International B.V.**
**6824 BM Arnhem (NL)**

(72) Inventors:
- **SMOLKO-SCHVARZMAYR, Natalija**
  **SE-471 72 Hjälteby (SE)**
- **GUSTAFSSON, Charlotte Ewa Karin**
  **SE-42134 Västra Frölunda (SE)**
- **WETZEL, Alexander Michael**
  **SE-44492 Jörlanda (SE)**
- **LJUNGDAHL, Göran Thomas**
  **SE-43351 Öjersjö (SE)**
- **SCHWARZMAYR, Louis**
  **SE-471 72 Hjälteby (SE)**
- **JANIAK, John André**
  **SE-417 21 Göteborg (SE)**
- **WIDELL, Mikael Ivar**
  **SE-44295 Hålta (SE)**

(74) Representative: **LKGlobal UK Ltd.**
**Cambridge House, Henry Street**
**Bath BA1 1BT (GB)**



(56) References cited:
**EP-A1- 0 544 185** **DE-A1- 4 010 279**
**DE-A1- 4 016 792** **DE-A1- 4 133 063**
**US-A- 2 040 187** **US-A- 2 383 467**
**US-A- 2 424 552** **US-A- 4 382 036**


EP 3 648 890 B1


Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process to treat carbonatitic non-sulfidic ores, such as carbonatitic phosphate ores and to collector compositions that are suitably used in such processes.

Froth flotation is a physico-chemical process used to separate mineral particles considered economically valuable from those considered waste. It is based on the ability of air bubbles to attach onto those particles previously rendered hydrophobic. The particle-bubble combinations then rise to the froth phase from where it discharges the flotation cell whilst the hydrophilic particles remain in the flotation cell. Particle hydrophobicity is, in turn, induced by special chemicals called collectors. In direct flotation systems, it is the economically valuable minerals which are rendered hydrophobic by the action of the collector. Similarly, in reverse flotation systems, the collector renders hydrophobicity to those mineral particles considered waste. The efficiency of the separation process is quantified in terms of recovery and grade. Recovery refers to the percentage of valuable product contained in the ore that is removed into the concentrate stream after flotation. Grade refers to the percentage of the economically valuable product in the concentrate after flotation. A higher value of recovery or grade indicates a more advantageous flotation system. Usually for a collector to be of commercial interest in an application a minimum grade needs to be reached and for this minimum grade an as high as possible recovery. In collector compositions usually the secondary collector is primarily responsible for improvement of the recovery, efficiency, frothing characteristics, etc and the primary collector for the selectivity.

DE 4016792 discloses, like DE 4010279 and DE 4133063, a process to treat non-sulfidic siliceous ores by a flotation process. In DE 792 as collector composition mixtures of esters of dicarboxylic acid with fatty acid monoalkylamides are used, optionally in combination with further anionic or non-ionic surfactants. In DE 279 as collector composition dicarboxylic acid N alkylmonoamides are used, optionally in combination with further anionic or non-ionic surfactants. In DE '063 etheramines with at least one anionic or non-ionic co-collector component are used as collector composition. Following formulae XVII and XVIII in DE'792 alkylphosphates and alkyletherphosphates are one option (out of many) of compounds that can be employed as such (optional or secondary) collector component. The use of phosphate compounds as a primary collector is not disclosed or suggested in any of the documents, let alone for carbonatitic ores. Neither is in any of the Examples the use of a pyrophosphate component in a collector composition demonstrated, nor is it disclosed or suggested that organic di- or higher phosphates lead to a benefit in a flotation process.

EP 544185 discloses a process to treat non-sulfidic siliceous ores by using a collector composition that contains as a primary collector a sulfosuccinate and optionally a further surfactant that may be chosen from a big group of possibilities and that also includes an alkyl phosphate or alkyletherphosphate. The use of phosphate compounds as a primary collector is not disclosed or suggested in EP 544185. EP 544185 furthermore does not disclose alkyldiphosphate, alkyltriphosphate or alkyltetraphosphate compounds. In none of the Examples of EP 544185 the use of a phosphate in a collector composition is demonstrated, nor is the difference between different phosphate compounds suggested.

The invention now provides a process treat carbonatitic non-sulfidic ores with a collector composition that comprises a phosphate compound of the formula I

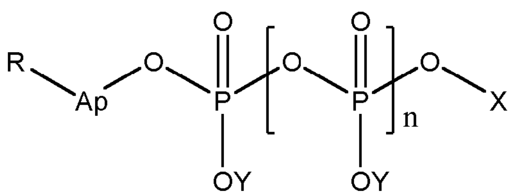

I

wherein R is linear or branched, saturated or unsaturated hydrocarbon group containing 1 to 24 carbon atoms, A is an alkylene oxide unit; Y is H, Na, K or an ammonium or alkylated ammonium, n is 1 - 3, p is 0 - 25, X is chosen from the same groups as R-Ap or Y, or when n is 2 or 3, the -O-X and -O-Y jointly may be a -O- bridge to give a cyclic phosphate.

In this document the compounds of formula I wherein n is 1-3 are also sometimes referred to as "pyrophosphates" so to distinguish them from "monophosphates" wherein n is 0.

The invention furthermore relates to a collector composition for the process to treat carbonatitic non-sulfidic ores wherein the collector composition comprises as a primary collector at least one phosphate compound of the formula I, and a secondary collector that comprises a monophosphate compound and one or more other secondary collector compounds that can be an anionic collector compound selected from the group of fatty acids, alkylsulfosuccinates, alkylmaleates, alkylamidocarboxylates, esters of alkylamidocarboxylates, alkylbenzensulphonates, alkylsulfonates, sulphonated fatty acids or a nonionic collector compound of the group of ethoxylates, glycosides, ethanolamides or a mixture of two or more of these anionic and nonionic collectors.

The present invention provides an improved process to treat carbonatitic ores and collector compositions for use therein which provide the required grade of separation of the desired product from the ore and an improved recovery

and selectivity. The present invention additionally provides an improvement in that a reduced total amount of the collector composition can be employed in the flotation process.

It should be noted that US 4,287,053 discloses a phosphate depressant for treating carbonatitic phosphate ores. Depressants however are known to have a distinctly different function than collectors. Also US 2,424,552 discloses phosphates as a depressant, which are in this document all inorganic phosphates. In the examples hexametaphosphate is used. The document does not disclose organic phosphates, such as phosphates containing a hydrocarbon group.

If the alkoxylation degree (DA, the value of p) is 0 then preferably R is a group containing 6 to 16 carbon atoms, even more preferably R is a group containing 8 to 15 carbon atoms. When R has up to 12 carbon atoms it is preferably linear or branched to only a limited degree. When R contains 12 - 16 carbon atoms it is preferably branched. Even more preferably when R contains up to 12 carbon atoms the degree of branching is 0-2.2 and when R contains 12 - 16 carbon atoms the degree of branching is preferably between 1.5 and 3.

When R contains more than 16 carbon atoms it is preferably unsaturated. Even more preferably when R contains more than 16 carbon atoms the degree of unsaturation is between 0.2 - 2, most preferably 0.5 - 1.1.

In another preferred embodiment each A is independently a propylene oxide group or ethylene oxide group. Even more preferred A is an ethylene oxide group. The value of p is preferably 0-15, more preferably 0-10, most preferably 0-8. If R contains more than 12 carbon atoms, the value of p is preferably chosen higher than when R contains up to and including 12 carbon atoms.

By "the degree of branching" (DB) as used herein is meant the total number of (terminal) methyl groups present on the R alkyl chain minus one (side chains that are alkyls other than methyls being counted by their terminal methyls). It should be noted that degree of branching is an average value for the R groups as present in the phosphate compound of formula I and hence does not have to be an integer.

By "the degree of unsaturation" (DU) as used herein is meant the total number of double bonds in the alkyl chain. It should be noted that degree of unsaturation is an average value for the R groups as present in the phosphate compound of formula I or formula II and hence does not have to be an integer.

By the degree of alkoxylation (DA) as used herein is meant the total number of alkylene oxide units A between the alkyl chain R and phosphorous containing unit, which corresponds with the value of p in formula I. As understood by someone skilled in the art, a degree of alkoxylation is an average number and does not have to be an integer. The alkylene oxide units A are suitably ethylene oxide, propylene oxide or butylene oxide.

When R is a group containing 1 to 12 carbon atoms, the DB is preferably between 0 and 2.2 and p is higher than 0. When R contains 1 to 12 carbon atoms preferably at least one unit A is present which is a propylene oxide unit. Even more preferably when R contains 1 to 10 carbon atoms, p is between 1 and 25, yet more preferable between 4 and 10 and most preferable between 5 and 8. When R contains 1 to 10 carbon atoms, even more preferably one or more of the A units are propylene oxide or butylene oxide, or when R contains 1 to 10 carbon atoms in another more preferable embodiment a block of propylene oxide units A is first bound to R and next a block of ethylene oxide units A.

If R is a group containing 12 to 16 carbon atoms, p is preferably higher than 0, and in a further preferred embodiment the groups A are propylene oxide, ethylene oxide or a combination of both propylene oxide and ethylene oxide. When R contains 12 - 16 carbon atoms it is preferably branched. Even more preferably, the degree of branching is between 0.2 and 3. When R contains more than 16 carbon atoms it is preferably linear and unsaturated. More preferably when p is higher than 0, and R contains 16 carbon atoms or more, one or more of the groups A are ethylene oxide. Yet even more preferably when R contains more than 16 carbon atoms the degree of unsaturation is between 0.2 - 2, most preferably 0.5 - 1.1.

In yet another preferred embodiment n=1.

In an embodiment, the process of the invention relates to the separation of apatite from non-sulfidic carbonatitic ores.

Carbonatitic ores are ores that contain carbonates. In preferred embodiments the carbonate ores contain calcium carbonate (calcite). Even more preferred carbonatitic ores contain between 5 and 60% by weight of calcium carbonate.

The amount of phosphate minerals such as apatite in the carbonatitic ore in embodiments is between 8 and 30% by weight. In further embodiments the ores may contain other main minerals such as dolomite, iron oxide minerals and various silicate minerals.

In an embodiment the process is a process for selective flotation of apatite.

In a preferred embodiment the process is a direct flotation, even more preferred it is a direct flotation process to isolate apatite from carbonatitic phosphate ores.

The pH during the process of the present invention is preferably between 8 and 11.

The collector composition of the present invention for use in a process to treat non-sulfidic carbonatitic ores contains a primary collector that comprises a phosphate of the above formula (I) wherein R, X, Y, A, p and n have the same meaning as above, a monophosphate secondary collector compound that is preferably of the formula II

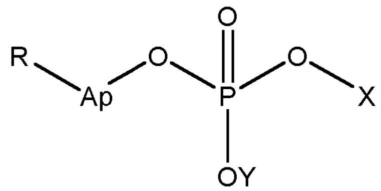

II

and one or more other secondary collectors that may be an anionic collector selected from the group of fatty acids that are preferably of the formula RCOOY, sulphonated fatty acids that are preferably of the formula $RCH(SO_3Y)COOY$, alkylsulfosuccinates that are preferably of the formula III

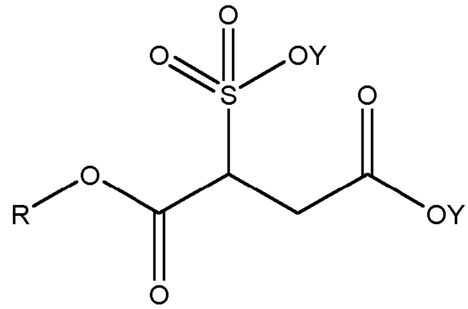

III,

alkylmaleates that are preferably of the formula IV

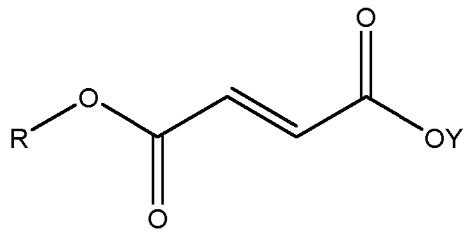

IV,

alkylamidocarboxylates that are preferably of the formula V

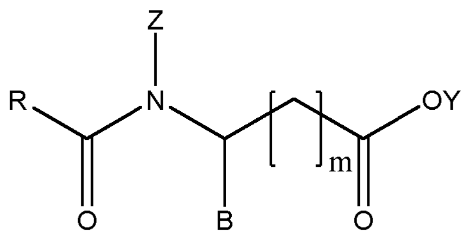

V

wherein in all above structures and formulae II-V, each R, A, p, Y independently has the meaning as defined above for formula I, m is 0-7 , B is -H, $-CH_3$, $-CH(CH_3)_2$, $-CH_2CH(CH_3)_2$, $-CH(CH_3)CH_2CH_3$, Z is -H, $-CH_3$ or $-CH_2CH_3$, esters of the above alkylamidocarboxylates (following the formula V of the alkylamidocarboxylates compounds wherein Y is an alcohol derived hydrocarbon group, such as also described in US20160129456), alkylbenzensulphonates that are preferably of the formula VI

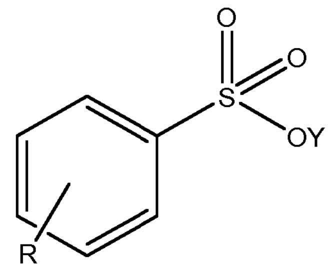

VI,

alkylsulphonates that are preferably of the formula VII

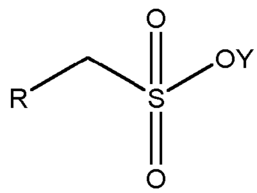

VII,

or a nonionic collector of the group of alkoxylates (alkoxylated fatty alcohols RO(A)H, alkoxylated fatty acids RC(O)O(A)H), alkyl glycosides $R(C_6O_6H_{11})_k$, alkylethanolamides of the formulae VIII or IX

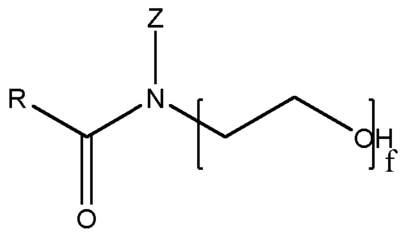

VIII

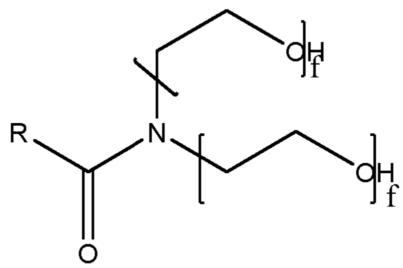

IX

wherein each R, A and Z independently have the above-indicated meaning, f is 1-25, preferably f is 1-15, and most preferable 1-10 and each f is independently 1 to 25;
or a mixture of two or more of these anionic and nonionic collectors

The monophosphate secondary collector compound can be separately and purposively added to the collector composition and can be chosen from the group of compounds as defined above with formula II but monophosphate compounds can be inherently formed in the process to prepare the primary collector phosphate compound of above formula I. If in the composition obtained when manufacturing the phosphate compound of formula I such other phosphates are not removed, a composition is obtained that inherently contains both a primary collector of the present invention and a monophosphate secondary collector.

Preferably, the primary collector is present in an amount of 5-90 wt %, the monophosphate secondary collector in an amount of 10-60 wt% and one or more of the other secondary collector in an amount of 1- 50 wt%, wherein the wt% is the wt% on total solids content of the collector composition.

In preferred embodiments the amount of monophosphate secondary collector is between 25 and 50 wt% on total solids content of the collector composition because monophosphates as explained above are often formed in processes to prepare di- and tri and tetraphosphates and for the purpose of using the higher phosphates in a collector composition it is not needed to separate off the monophosphates, as they can play a role as a secondary collector. Other

secondary collectors are preferably present in an amount of 5- 25 wt%. The amount of the phosphate compound of formula I in the collector compositions and process of the present invention is preferably between 20 and 50wt%.

In another preferred embodiment the amount of the phosphate compound of formula I in the collector compositions and process of the present invention is between 40 and 85 wt% , even more preferred between 50 and 75 wt% on total phosphate content in the collector composition. The collector composition can be added to the flotation in concentrated form (i.e. 5 -100 wt% solids, preferably 50 - 100wt% solids) or as 1-5 weight % aqueous solution.

The process and collector composition of the invention may involve other additives and auxiliary materials which are typically present in a froth flotation process that can be added at the same time or, preferably, separately during the process. Further additives that may be present in the flotation process are depressants (such as starch, dextrin, quebracho), dispersants (such as water glass), frothers/froth regulators/froth modifiers/defoamers (such as MIBC, Texanol, alkoxylated low molecular weight alcohols), and pH-regulators (such as NaOH).

In another aspect, the present invention relates to a pulp comprising crushed and ground ore, a primary collector or a collector composition as defined herein, and optionally further flotation aids. This pulp can be prepared by first grounding the ore and then adding collector composition or by adding at least part of the collector composition to the ore and milling the ore to pulp in the presence of at least part of the collector composition.

The carbonatitic ores that can be used in the process of the invention may include natrolite, sodalite, apatite, magnetite, barite, fluorite, ancyclite group minerals and other rare minerals, and also mica and vermiculite -containing ores.

The amount of the collector used in the process of reversed flotation of the present invention will depend on the amount of impurities present in the ore and on the desired separation effect, but in some embodiments will be in the range of from 50-1000 g/ton dry ore, preferably in the range of from 70-500 g/ton dry ore, more preferably 80-200 g/ton dry ore.

The present invention is illustrated by below examples

Example 1

Synthesis of alkylated pyro-phosphate

Isotridecanol (40 g, 200 mmol) was added to a glass reactor with a flange equipped with an overhead stirrer. The reactor was flushed with nitrogen for 15 minutes. The mixture was heated with an oil bath to 55°C and methylsulfonic acid (5.39 g, 5.39 mmol) was added. Phosphorus pentoxide (14.2 g, 100.0 mmol) was added portion wise, keeping temperature at 55°C. Stirring at 55°C under nitrogen atmosphere was continued overnight. The final product was analyzed by $^{31}$P-NMR spectroscopy. $^{31}$P -NMR ($CDCl_3$): $\delta$ 4 to -1 ppm monophosphate; $\delta$ -12 to -16 ppm pyro-phosphate; $\delta$ -28 to -30 ppm polyphosphate.

Example 2

General flotation procedure

Four hundred (400) g of the phosphate ore containing 14% of apatite, 58% of calcite and about 22% of dolomite was placed into a 2.0L Denver flotation cell, 800 ml of deionized water was added and the mixing started. Then 5 minutes conditioning with 4.0 ml of a 1%(w/w) aqueous starch solution was performed, if required by the experiment keeping the pH of the flotation mixture at 10,6 with a 5% NaOH aqueous solution. Then the collector was added as a 1%(w/w) solution, and conditioning was continued for 2 minutes, if required by the experiment keeping the pH of the flotation mixture at 10.6 with a 5% NaOH aqueous solution. After the conditioning steps deionized water was added so that a total volume of 2.0L was obtained and the flotation was started. The experiment was performed at RT (20$\pm$1°C) and self-aeration. The rougher flotation, followed by two cleaning steps (2.0L Denver cells), was performed. All fractions (tailings, middlings and concentrate) were collected and analyzed. Figure 1 illustrates the flotation steps performed and the different fractions collected.

The collectors displayed in Table 1 were used in the flotation procedure above, and the flotation results with these collectors are displayed in Table 1. The selectivity factor is calculated according to the following equation:

$$Selectivity\ factor = \frac{\text{reduction of waste (\%)}}{100 - \text{recovery of apatite (\%)}},$$

Where

$$Reduction\ of\ waste\ (\%) = \frac{\text{waste in fraction } (\%)}{\text{waste in the feed } (\%)} * 100$$

The selectivity factor should be as high as possible.

The collector compositions 1 and 2 contain the isotridecanol alkylated product as prepared in Example 1, wherein there is about 35% alkylated monophosphate and about 65% alkylated polyphosphate (n = 1-3). Collector composition 3 is an isotridecanol alcohol based sarcosinate prepared following the process of US 4,358,368 Example 3 by reacting isotridecylchloroglyceryl ether (obtainable by reaction of epichlorohydrine and isotridecanol), and methylglycine. Collector composition 4 is an isotridecanol alkylated monophosphate prepared by reacting polyphosphoric acid and isotridecanol to give the corresponding monophosphate ester

**Table 1.**

| Surfactant | pH | Dosage, g/t | Fraction | Amount of phosphate as $P_2O_5$ | | Selectivity factor |
|---|---|---|---|---|---|---|
| | | | | Grade % | recovery % | |
| Invention Collector 1 (isotridecanol alkylated pyrophosphate) | 10.6 | 125 | Rougher concentrate | 15.4 | 94.8 | 14.2 |
| | | | 1st cleaner concentrate | 22.3 | 92.2 | 6.1 |
| | | | 2nd cleaner concentrate | 30.2 | 90.0 | 2.8 |
| Invention Collector 2 (isotridecanol alkylated pyrophosphate) | 9.5 | 110 | Rougher concentrate | 15.85 | 96.1 | 19.0 |
| | | | 1st cleaner concentrate | 23.16 | 92.9 | 6.3 |
| | | | 2nd cleaner concentrate | 30.1 | 88.8 | 2.6 |
| Comparison I Collector 3 (isotridecanol based "sarcosinate") | 10.6 | 145 | Rougher concentrate | 15.4 | 95.0 | 15.0 |
| | | | 1st cleaner concentrate | 23.6 | 87.1 | 3.4 |
| | | | 2nd cleaner concentrate | 32.1 | 68.6 | 0.8 |
| Comparison II Collector 4 (isotridecanol alkylated monophosphate) | 10.6 | 125 | Rougher concentrate | 12.67 | 57.5 | 1.9 |
| | | | 1st cleaner concentrate | 15.46 | 38.9 | 1.0 |
| | | | 2nd cleaner concentrate | 22.4 | 15.2 | 0.6 |

From the results presented in the table 1 one can see that the use of alkylated pyro-phosphate allows obtaining 2-3.5 times better selectivity during cleaning steps. The results also show that efficiency of the alkyl pyrophosphate is at least 10-15% higher than that of a state of the art sarcosinate collector as it can be dosed lower, while using only a monophosphate compound does not even result in the desired grade. The results additionally show that the pyrophosphates can work in a broad pH interval.

## Claims

1. Process to treat carbonatitic non-sulfidic ores with a collector composition that comprises a phosphate compound of the formula I

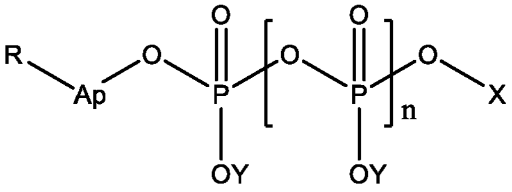

I

wherein R is linear or branched, saturated or unsaturated hydrocarbon group containing 8 to 24 carbon atoms, A is an alkylene oxide unit; Y is H, Na, K or an ammonium or alkylated ammonium, n is 1 - 3, p is 0 - 25, X is chosen from the same groups as R-Ap or Y, or when n is 2 or 3, the -O-X and an -O-Y may be a single -O- bound to give a cyclic phosphate.

2. Process of claim 1 wherein R is a group containing 8 to 16 carbon atoms.

3. Process of claim 1 wherein R is a group containing 9 to 15 carbon atoms.

4. Process of any one of claims 1 to 3 wherein n is 1

5. Process of any one of claims 1 to 4 wherein p is 0 to 8.

6. Process of any one of claims 1 to 5 wherein the process is a process to isolate phosphates from the ores.

7. Process of claim 6 wherein the process is a direct flotation process to isolate apatite from the ores

8. Process of any one of claims 1 to 7 wherein the pH during the process is between 8 and 11

9. Collector composition for use in process of any one of claims 1 to 8 containing a primary collector that comprises a phosphate compound of the formula I

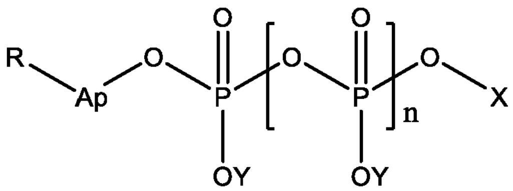

I

wherein R is linear or branched, saturated or unsaturated hydrocarbon group containing 8 to 24 carbon atoms, A is an alkylene oxide unit; Y is H, Na, K or an ammonium or alkylated ammonium, n is 1 - 3, p is 0 - 25, X is chosen from the same groups as R-Ap or Y, or when n is 2 or 3, the -O-X and an -O-Y may be a single -O- bound to give a cyclic phosphate;
a monophosphate secondary collector, and
one or more secondary collectors that are an anionic collector selected from the group of fatty acids, alkylsulfosuccinates, alkylmaleates, alkylamidocarboxylates, esters of alkylamidocarboxylates, alkylbenzensulphonates, alkylsulfonates, sulphonated fatty acids, or a nonionic collector of the group of alkoxylates, alkylglycosides, alkylethanolamides or a mixture of two or more of these anionic and nonionic collectors.

10. Collector composition of claim 9 wherein the amount of phosphate compound of formula I is between 40 and 85 wt% on total phosphate content in the collector composition.

11. A pulp comprising crushed and ground carbonatitic ore and a collector composition of claim 9 or 10.

**Patentansprüche**

1. Verfahren zur Behandlung von carbonatitischen nichtsulfidischen Erzen mit einer Sammlerzusammensetzung, die eine Phosphatverbindung der Formel I umfasst

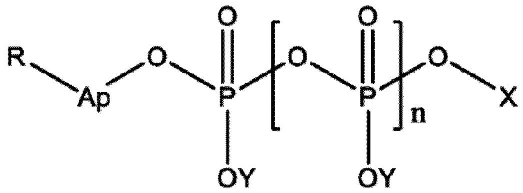

I

wobei R eine lineare oder verzweigte, gesättigte oder ungesättigte Kohlenwasserstoffgruppe ist, die 8 bis 24 Kohlenstoffatome enthält, A eine Alkylidenoxideinheit ist; Y H, Na, K oder ein Ammonium oder alkyliertes Ammonium ist, n 1 - 3 beträgt, p 0 - 25 beträgt, X aus derselben Gruppe wie R-Ap oder Y ausgewählt wird oder wenn n 2 oder 3 beträgt, -O-X und ein -O-Y-ein einzelnes -O- sein können, das gebunden ist, um ein cyclisches Phosphat zu ergeben.

2. Verfahren nach Anspruch 1, wobei R eine Gruppe ist, die 8 bis 16 Kohlenstoffatome enthält.

3. Verfahren nach Anspruch 1, wobei R eine Gruppe ist, die 9 bis 15 Kohlenstoffatome enthält.

4. Verfahren nach einem der Ansprüche 1 bis 3, wobei n 1 beträgt.

5. Verfahren nach einem der Ansprüche 1 bis 4, wobei p 0 bis 8 beträgt.

6. Verfahren nach einem der Ansprüche 1 bis 5, wobei das Verfahren ein Verfahren zum Isolieren von Phosphaten von Erzen ist.

7. Verfahren nach Anspruch 6, wobei das Verfahren ein Direktflotationsverfahren zum Isolieren von Apatit von den Erzen ist.

8. Verfahren nach einem der Ansprüche 1 bis 7, wobei der pH-Wert während des Verfahrens zwischen 8 und 11 liegt.

9. Sammlerzusammensetzung zur Verwendung bei einem Verfahren nach einem der Ansprüche 1 bis 8, die Folgendes enthält einen primären Sammler, der eine Phosphatverbindung der Formel I umfasst

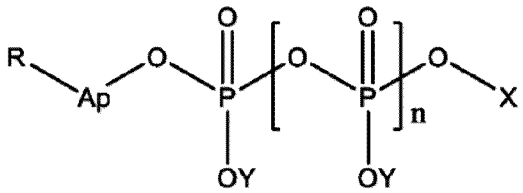

I

wobei R eine lineare oder verzweigte, gesättigte oder ungesättigte Kohlenwasserstoffgruppe ist, die 8 bis 24 Kohlenstoffatome enthält, A eine Alkylenoxideinheit ist; Y H, Na, K oder ein Ammonium oder alkyliertes Ammonium ist, n 1 - 3 beträgt, p 0 - 25 beträgt, X aus derselben Gruppe wie R-Ap oder Y ausgewählt wird oder wenn n 2 oder 3 beträgt, -O-X und ein -O-Y-ein einzelnes -O-sein können, das gebunden ist, um ein cyclisches Phosphat zu ergeben;
einen sekundären Monophosphatsammler und
einen oder mehrere sekundäre Sammler, die ein anionischer Sammler sind ausgewählt aus der Gruppe von Fettsäuren, Alkylsulfosuccinaten, Alkylmaleaten, Alkylamidocarboxylaten, Estern von Alkylamidocarboxylaten, Alkylbenzolsulfonaten, Alkylsulfonaten, sulfonierten Fettsäuren oder einen nichtionischen Sammler der Gruppe von Alkoxylaten, Alkylglycosiden, Alkylethanolamiden oder einer Mischung von zwei oder mehreren dieser anionischen und nichtionischen Sammlern.

10. Sammlerzusammensetzung nach Anspruch 9, wobei die Menge der Phosphatverbindung der Formel I zwischen

40 und 85 Gew.-% , auf den gesamten Phosphatgehalt in der Sammlerzusammensetzung bezogen, beträgt.

11. Pulpe umfassend zerkleinertes und zermahlenes carbonatitisches Erz und eine Sammlerzusammensetzung nach Anspruch 9 oder 10.

## Revendications

1. Procédé pour traiter des minerais non sulfurés carbonatitiques avec une composition de collecteurs qui comprend un composé phosphate de formule I

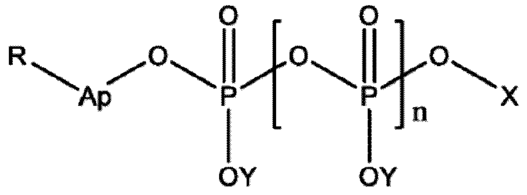

I

dans laquelle R représente un groupe hydrocarboné saturé ou insaturé, linéaire ou ramifié contenant de 8 à 24 atomes de carbone, A représente un motif oxyde d'alkylène ; Y représente H, Na, K ou un ammonium ou un ammonium alkylé, n vaut 1 à 3, p vaut 0 à 25, X est choisi dans les mêmes groupes que R-Ap ou Y, ou lorsque n vaut 2 ou 3, -O-X et -O-Y peuvent être un -O- unique lié pour donner un phosphate cyclique.

2. Procédé selon la revendication 1 dans lequel R représente un groupe contenant 8 à 16 atomes de carbone.

3. Procédé selon la revendication 1 dans lequel R représente un groupe contenant 9 à 15 atomes de carbone.

4. Procédé selon l'une quelconque des revendications 1 à 3 dans lequel n vaut 1.

5. Procédé selon l'une quelconque des revendications 1 à 4 dans lequel p vaut de 0 à 8.

6. Procédé selon l'une quelconque des revendications 1 à 5 dans lequel le procédé est un procédé permettant d'isoler les phosphates des minerais.

7. Procédé selon la revendication 6 dans lequel le procédé est un procédé de flottation directe permettant d'isoler l'apatite des minerais.

8. Procédé selon l'une quelconque des revendications 1 à 7 dans lequel le pH pendant le procédé est compris entre 8 et 11.

9. Composition de collecteurs pour une utilisation dans le procédé selon l'une quelconque des revendications 1 à 8 contenant un collecteur primaire qui comprend un composé phosphate de formule I

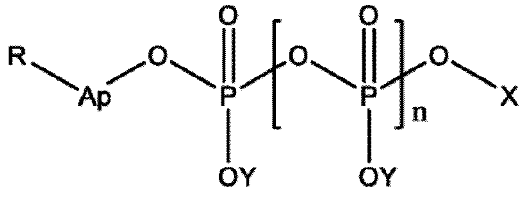

I

dans laquelle R représente un groupe hydrocarboné saturé ou insaturé, linéaire ou ramifié contenant de 8 à 24 atomes de carbone, A représente un motif oxyde d'alkylène ; Y représente H, Na, K ou un ammonium ou un ammonium alkylé, n vaut 1 à 3, p vaut 0 à 25, X est choisi dans les mêmes groupes que R-Ap ou Y, ou lorsque n vaut 2 ou 3, -O-X et -O-Y peuvent être un -O- unique lié pour donner un phosphate cyclique ;
un collecteur secondaire de monophosphate, et
un ou plusieurs collecteurs secondaires qui sont un collecteur anionique sélectionné dans le groupe des acides

gras, des sulfosuccinates d’alkyle, des maléates d’alkyle, des amidocarboxylates d’alkyle, des esters d’amidocarboxylates d’alkyle, des benzènesulfonates d’alkyle, des sulfonates d’alkyle, des acides gras sulfonés ou un collecteur non ionique du groupe des alcoxylates, des alkylglycosides, des alkyléthanolamides ou un mélange de deux de ces collecteurs anioniques et non ioniques ou plus.

**10.** Composition de collecteurs selon la revendication 9 dans laquelle la quantité de composé phosphate de formule I est comprise entre 40 et 85 % en poids sur la teneur en phosphate totale dans la composition de collecteurs.

**11.** Pâte comprenant un minerai carbonatitique broyé et moulu et une composition de collecteurs selon la revendication 9 ou 10.

Figure 1

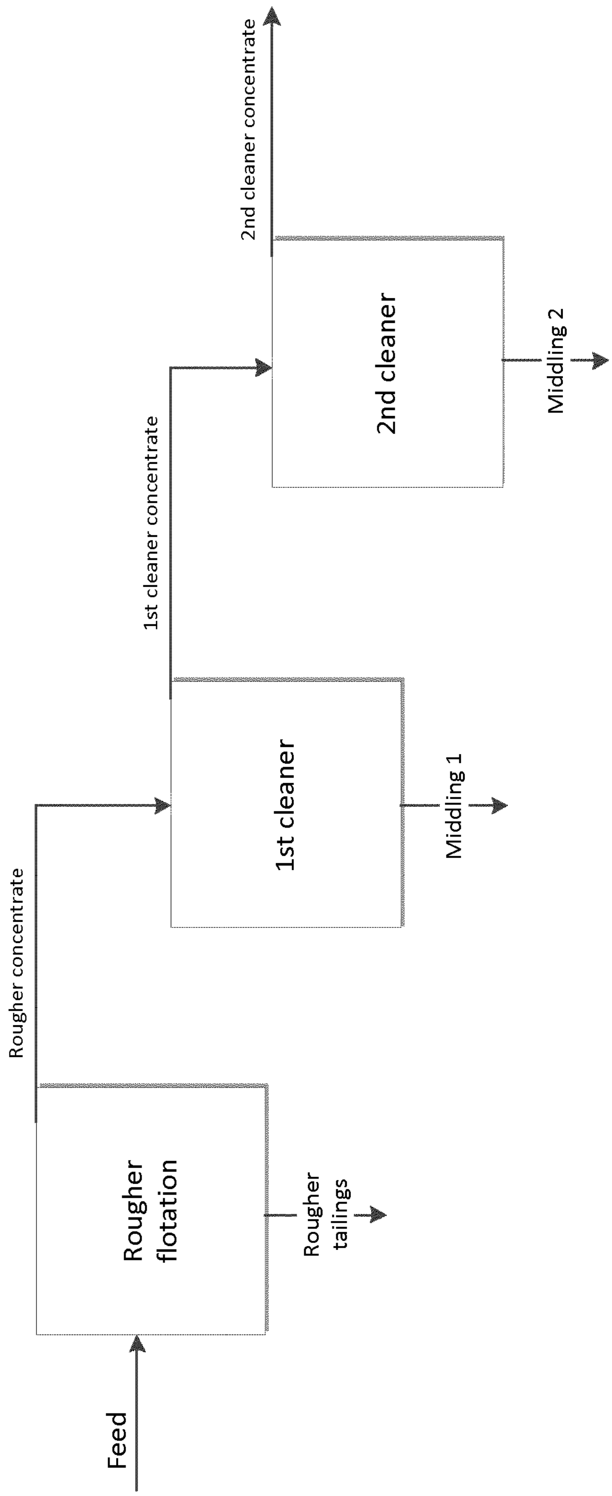
Feed
Rougher flotation
Rougher tailings
Rougher concentrate
1st cleaner
Middling 1
1st cleaner concentrate
2nd cleaner
Middling 2
2nd cleaner concentrate

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4016792
- DE 4010279
- DE 4133063
- EP 544185 A
- US 4287053 A
- US 2424552 A
- US 4358368 A